# EUROPÄISCHE PATENTSCHRIFT

(11) **EP 1 247 892 B1**
(45) Veröffentlichungstag und Bekanntmachung des Hinweises auf die Patenterteilung: **02.07.2008**
(21) Anmeldenummer: 02002851.0
(22) Anmeldetag: 08.02.2002
(51) Int. Cl.: D21C 5/02

(54) **Verfahren zur Aufbereitung von holzstoffhaltigem Altpapier**
Treatment of wood-containing waste paper
Traitement de vieux papiers contenant du bois

(30) Priorität: 02.04.2001 DE 10116368
(43) Veröffentlichungstag der Anmeldung: 09.10.2002
(73) Patentinhaber: Voith Patent GmbH, 89522 Heidenheim (DE)
(72) Erfinder: Bätz, Elisabeth, 88273 Fronreute (DE); Sepke, Paul-Wilhelm, 88276 Berg (DE); Schabel, Samuel, Dr., 88212 Ravensburg (DE)

(56) Entgegenhaltungen:
- EP-A- 0 967 320
- EP-A- 1 077 281
- WO-A-00/50695
- DE-A- 19 808 355
- GB-A- 942 177
- GB-A- 2 036 603
- US-A- 5 423 993
- US-A- 5 503 710
- US-A- 5 996 806

## Beschreibung

Die Erfindung bezieht sich auf Verfahren zur Aufbereitung von holzstoffhaltigem Altpapier gemäß den Oberbegriffen der Ansprüche 1 und 2.

Verfahren dieser Art werden benutzt, um die Altpapierfaser-Rohstoffe so weit aufzubereiten , dass sie auch zur Herstellung von hochwertigen Papieren verwendet werden können (z.B. WO-A-00 50 695). Dabei sind unter solchen Papieren insbesondere sogenannte SC- und LWC-Papiere zu verstehen. In der Regel werden diese Sorten als grafische Papiere eingesetzt, bei denen bekanntlich die Qualitätsanforderungen besonders hoch sind. Da solche Papiere relativ dünn sind, oft nur ein Zehntel Millimeter dick nach dem Satinieren, ist es wichtig, dass die Rohstoffe nur solche Fasern enthalten, die bei diesen dünnen Blattformen nicht störend hervortreten oder das Papier ungleichmäßig erscheinen lassen. Auch für eine optimale Bedruckbarkeit ist eine einwandfreie Blattoberfläche entscheidend. Es ist außerdem zu vermeiden, dass weiche Zellstofffasern durch harte Fasern oder harte Faserbruchstücke beim eventuellen Satinieren so sehr zusammengedrückt werden, dass die Opazität verloren geht ("Schwarzsatinage").

Da bekanntlich die Bestrebung besteht, auch bei hochwertigen Papiersorten Altpapier, welches in der Regel holzstoffhaltig ist, einzusetzen, ist dieses Problem nicht immer leicht zu lösen. Holzstofffasern werden gewonnen, indem das Holz entweder mechanisch (MP) oder thermisch-mechanisch (TMP) oder mechanisch unter Zuhilfenahme von Chemikalien (CTMP) bearbeitet wird. Im Gegensatz dazu sind chemisch aufgeschlossene Zellstoffe (CP) zu sehen, die sich bekanntlich durch eine hohe Flexibilität der Fasern auszeichnen.

Um bei Einsatz von holzstoffhaltigem Altpapier eine gute Oberflächenqualität zu erzielen, ist es daher meist erforderlich, durch ein Mahlverfahren den Faserstoff so weit zu zerkleinern, dass ein sauberes dünnes Blatt daraus gebildet werden kann.
Hierbei geht oft ein großer Teil des Festigkeitspotentials der Fasern verloren.

Der Erfindung liegt daher die Aufgabe zu Grunde, ein Verfahren zur Aufbereitung von holzstoffhaltigem Altpapier zu schaffen, mit dem durch spezifische Mahlung der Fasern ein Papierfaserstoff erzeugt werden kann, der den bereits erwähnten Anforderungen genügt.

Diese Aufgabe wird durch die Merkmale der Ansprüche 1 und 2 gelöst.

Durch die Kombination der beschriebenen Verfahrensschritte wird das
Festigkeitspotential der Fasern optimal genutzt, da gezielt solche Holzstofffasern herausfraktioniert werden, deren Dicke und/oder Steifigkeit für den angegebenen Zweck noch ungeeignet sind. Dann wird nur diese Fraktion betont faserzerkleinernd gemahlen, derart dass sie in einer Mischung mit der anderen Fraktion die gestellten Anforderungen erfüllt.

Die Erfindung und ihre Vorteile werden erläutert an Hand von Zeichnungen. Dabei zeigen:
- Fig. 1: ein Schema zur Durchführung des erfindungsgemäßen Verfahrens;
- Fig. 2, 3 und 4: schematisch: Drei verschiedene Möglichkeiten zur Durchführung der Fraktionierung;
- Fig. 5: eine Kombination der Fraktionierung mit einer Störstoffsortierung

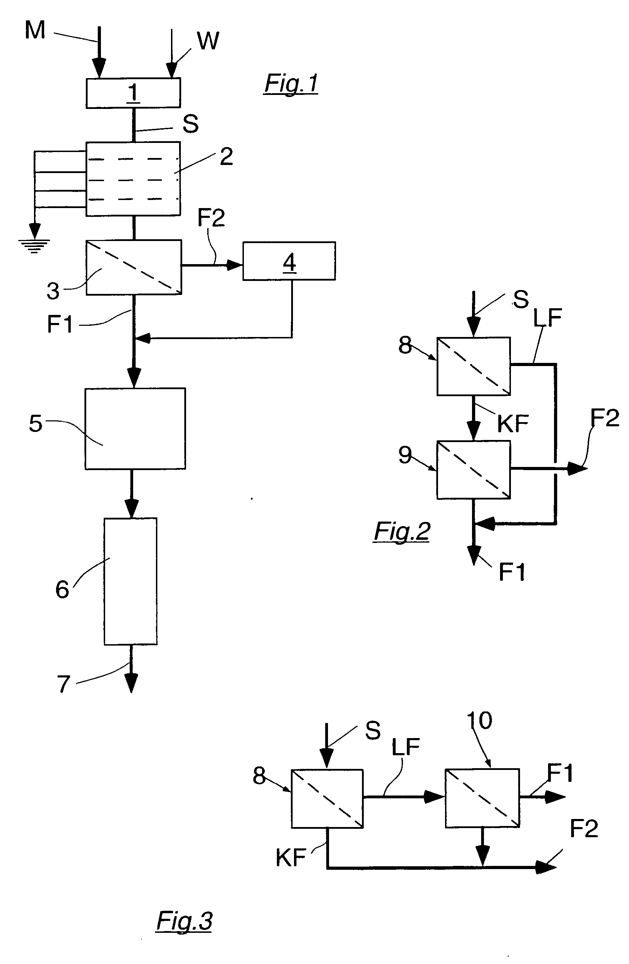

Das in der Fig. 1 gezeigte Verfahrensschema stellt die wesentlichen Verfahrensschritte der Erfindung an Hand eines Beispiels dar. Zunächst erfolgt die Stofflösung 1, bei der das holzstoffhaltige Altpapier M zusammen mit Wasser W so behandelt wird, dass sich eine wässrige Faserstoffsuspension S bildet. Meistens ist anschließend eine mehr oder weniger aufwendige Reinigung 2 der Faserstoffsuspension S notwendig. Welcher Aufwand zur Herstellung eines ausreichend sauberen Papierstoffes erforderlich ist, ist an sich bekannt. In Fällen, in denen ein von vorneherein sauberer Rohstoff (z.B. Papiermaschinen- Ausschuss) eingesetzt wird, kann die Reinigung auch entfallen. In der sich anschließenden Fraktionierung 3 werden mindestens zwei Faserfraktionen gebildet, von denen die Weichfraktion F1 mit flexiblen Fasern angereichert ist und die Hartfraktion F2 mit starren Fasern. Bei einem Fasergemisch, wie es im Altpapier vorliegt, geht ein beträchtlicher Anteil der Holzstofffasern in die so gebildete Hartfraktion F2.

In der sich anschließenden Mahlung 4 der Hartfraktion F2 werden insbesondere die Holzstofffasern zerkleinert. Das heißt, die Fasern werden gekürzt und/oder in ihrer Dicke reduziert. Diese Wirkung wird besonders in einem Messerrefiner und besonders dann erreicht, wenn die Konsistenz der Suspension bei ca. 4 %, nicht über 8 %, liegt, wenn der Messerwinkel klein oder gleich 0 ist und wenn eine relativ hohe spezifische Kantenbelastung (gemessen z.B. in Ws/km) eingestellt wird. Größenordnungsmäßig sollten hier ca. 2000 Ws/km aufgebracht werden. In vielen Fällen ist eine solche Mahlung, die auch als agressiv bezeichnet werden kann, nicht sehr erwünscht, weil dadurch das Festigkeitspotential der Fasern nur ungenügend genutzt wird. Es hat sich aber gezeigt, dass sich dadurch im Zuge des erfindungsgemäßen Verfahrens die Oberflächen-Qualität des fertigen Papiers beträchtlich steigern lässt. Der Vorteil des Verfahrens liegt darin, dass diese agressive Mahlung nur bei einem Teil der eingesetzten Fasern durchgeführt wird und dass die eigentlichen Festigkeitsträger, nämlich die flexiblen, zumeist auch längeren Zellstofffasern nicht gemahlen und daher nicht geschädigt werden. Der gemahlene Faserstoff wird mit der Weichfraktion F1 vermischt und dann in dem nachfolgenden Teil der Stoffaufbereitung 5 in an sich bekannter Weise weiter bearbeitet. Die Papiermaschine 6 erzeugt daraus das gewünschte hochwertige Papier 7.

Die erwähnte Aufteilung in die Weichfraktion und die Hartfraktion wird mit mindestens einer Trennapparatur durchgeführt. Wegen der hohen Anforderung an die Trennwirkung sind jedoch oft mehrere Stufen erforderlich, wozu in den Fig. 2, 3 und 4 Beispiele gezeigt werden. Die Fig. 2 zeigt, wie die Papierfasersuspension S einem ersten Fraktionator 8 zugeleitet und darin in eine Langfaserfraktion LF und eine Kurzfaserfraktion KF aufgeteilt wird. Dabei wird die Langfaserfraktion aus dem Rückstand und die Kurzfaserfraktion aus dem Durchlauf gebildet. Besonders geeignet ist z.B. ein Siebfraktionator mit einem Rotor gemäß der deutschen Patentanmeldung P 199 51 711.8. Die Langfaserfraktion enthält normalerweise die chemisch hergestellten Zellstofffasern, deren Längenspektrum schmal ist im Vergleich zu dem der Holzstofffasern. Die Kurzfaserfraktion KF wird in einem weiteren Fraktionator 9 erneut fraktioniert, und zwar in der Weise, dass eine Fraktion mit flexibleren und eine mit steiferen Fasern entsteht. Hierzu wird der Fraktionator 9 so betrieben, dass nicht
so sehr die Faserlänge, sondern die Faserflexibilität als Trenncharakteristikum dient. Beispiele für solche Fraktionierverfahren sind in der deutschen Patentanmeldung P 199 60 218.2 aufgeführt. Ein zu diesem Zweck besonders geeigneter Fraktionator ist ein Druckapparat zur Nasssiebung von der Art eines Drucksortierers. Dazu ist der DE 199 13 515 A1 ein speziell ausgestaltetes Schlitzsieb für einen solchen Fraktionator entnehmbar. Aber auch mit hochwirksamen Hydrozyklonen, sogenannten Cleanern, ist es möglich, eine Fraktionierung nach Faserflexibilität vorzunehmen.

In Spezialfällen kann auch die Langfaserfraktion LF des ersten Fraktionators so viel steife Holzstofffasern enthalten, dass es sich empfiehlt, diese nach Flexibilität zu fraktionieren. Dann würde, wie die Fig. 3 zeigt, die Kurzfaserfraktion KF des ersten Fraktionators 8 zusammen mit dem Überlauf des folgenden Fraktionators 10 als Hartfraktion F2 der Mahlung 4 zugeführt.

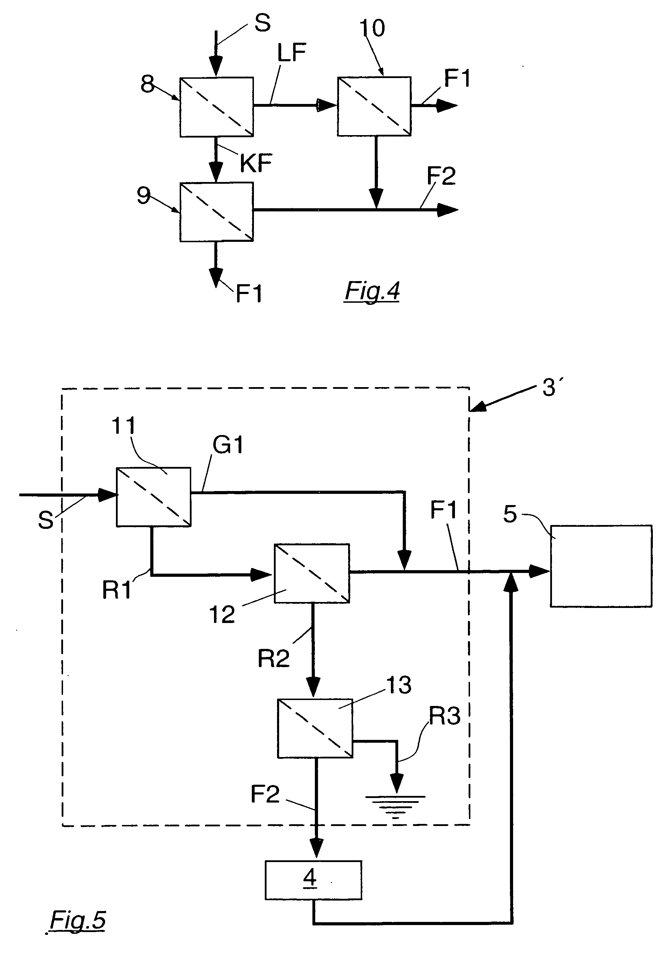

Die Fig. 4 zeigt eine noch etwas aufwendigere Art, die Fraktionierung 3 durchzuführen. Dort werden sowohl die Langfaserfraktion LF, als auch die Kurzfaserfraktion KF jeweils in einem weiteren eigenen Fraktionator 9 bzw. 10 aufgeteilt und wiederum nach Flexibilität klassiert.

Wenn die Altpapiersuspension unerwünschte Mengen von Störstoffen enthält, wird oft eine Nasssiebung zur Ausscheidung dieser Störstoffe durchgeführt, was zumeist Sortierung genannt wird. Wenn mit dieser Methode feine und feinste Störstoffe ausgeschieden werden sollen, findet oft auch eine Fraktionierung der Fasern statt, da die Sieböffnungen dann relativ fein gewählt werden. Das bedeutet, dass die Schmutzfraktion, also das am Sieb Abgewiesene, mit steiferen und/oder dickeren Fasern angereichert wird und die Gutstofffraktion, also der Siebdurchlauf, mit flexiblen und/oder dünneren Fasern. Diese Anreicherung lässt sich z.B. labormäßig durch Erfassung der sogenannten "R14-Fraktion" signifikant nachweisen.

Zwar wird, wie bereits schon erklärt wurde, ein reines Fraktionierverfahren in vielen Fällen mit speziellen optimierten Vorrichtungen durchgeführt, aber auch bei Vorrichtungen bzw. Verfahrensschritten, die im Grunde auf die Entfernung von Störstoffen, insbesondere faserfremden Störstoffen, ausgerichtet sind, kann die Fraktionierwirkung zur Durchführung des erfindungsgemäßen Verfahrens genutzt werden. Es ist in bestimmten Fällen sogar als Vorteil anzusehen, dass diese in der Regel unerwünschte Faserfraktionierung hier sozusagen als sinnvoller "kostenloser" Nebeneffekt auftritt. Als Beispiel für so eine Anwendung zeigt die Fig. 5 eine dreistufige, als Fraktionierung 3' anzusehende Sortierung. Gemäß diesem Schema wird die Faserstoffsuspension S, die nicht nur ein breites Faserspektrum, sondern auch Störstoffe enthält, einer ersten Sortierung 11 unterzogen. Maschinell kann dabei ein Drucksortierer benutzt werden. Der Überlauf eines Drucksortierers wird normalerweise als Rejekt bezeichnet. Er erhält hier das Bezugszeichen R1. Der Durchlauf der ersten Sortierung 11 ist der Gutstoff G1. Das Verfahren wird so geführt, dass der Rejekt R1 in eine zweite Sortierung 12 (zweite Stufe) kommt, dessen Überlauf, der zweite Rejekt R2, einer letzten Sortierung 13 (dritte Stufe) zugeführt wird. Der zweite Rejekt R2 ist sowohl mit Störstoffen, als auch mit harten Fasern bereits zwei Mal angereichert worden. Er kann in der letzten Sortierung 13 so bearbeitet werden, dass als Überlauf ein abfallartiger Gesamt-Rejekt R3 anfällt. Der Rejekt einer letzten Sortierstufe ist so zusammengesetzt, dass er üblicherweise nur noch eingedickt und verworfen wird. Der Durchlauf dieser letzten Sortierung 13 ist in der Terminologie dieser Verfahrensbeschreibung die Hartfraktion F2 und wird, wie bei den bisher beschriebenen Beispielen schon erläutert, durch die Mahlung 4 weiterverarbeitet. (Vor Durchführung der Mahlung 4 kann eine - nicht gezeigte - Eindickung erforderlich sein, da hochwirksame Sortierverfahren bei geringer Konsistenz, z.B. ca. 1 bis 2 % durchzuführen sind). Somit finden in den drei Sortierstufen unterschiedliche Vorgänge statt, was die Qualität der gebildeten Fraktionen betrifft. Die ersten beiden Sortierungen 11 und 12 reichern in ihren Überläufen solche Stoffe an, die sowohl zur Hartfraktion als auch zur Schmutzfraktion zu rechnen sind. Erst die letzte Sortierung 13 (hier: dritte Stufe) trennt Faserstoff von Störstoffen derart, dass die Hartfraktion F2 in den Durchlauf gelangt. In der Regel sind dann für die letzte Sortierung (13) Siebe mit größeren Öffnungen vorzusehen als bei der davorliegenden Sortierung (12) oder den davorliegenden Sortierungen (11, 12), welche vorzugsweise mit engen Schlitzen (0,1 bis 0,5 mm) arbeiten.

## Patentansprüche

1. Verfahren zur Aufbereitung von holzstoffhaltigem Altpapier (M) zu einer zur Erzeugung hochwertiger, insbesondere graphischer Papiere besonders geeigneten Faserstoffsuspension mit folgenden Schritten:
a) Herstellung einer wässrigen Faserstoffsuspension (S);
b) Reinigung (2) der Faserstoffsuspension (S), sofern sie störende Verunreinigungen enthält;
c) eine erste Fraktionierung in einem ersten Fraktionator (8), der die Faserstoffsuspension (S) gemäß der Faserlänge in eine Langfaserfraktion (LF) und eine Kurzfaserfraktion (KF) aufteilt und
d) Fraktionierung (3, 3') der Faserstoffsuspension (S) in eine Weichfraktion (F1) mit vermehrt flexiblen durch chemischen Aufschluss gebildeten Fasern und eine Hartfraktion (F2) mit vermehrt starren Holzstofffasern, indem
d1) die Kurzfaserfraktion (KF) in einem weiteren Fraktionator (9) entsprechend der Faserflexibilität aufgeteilt wird, wonach die steifere Fraktion die Hartfraktion (F2) bildet oder
d2) die Langfaserfraktion (LF) in einem weiteren Fraktionator (10) entsprechend der Faserflexiblität aufgeteilt wird, wonach die steifere Fraktion die Hartfraktion (F2) bildet,
e) eine stark faserzerkleinernde Mahlung (4) der Hartfraktion (F2) ohne die Weichfraktion (F1).

2. Verfahren zur Aufbereitung von holzstoffhaltigem Altpapier (M) zu einer zur Erzeugung hochwertiger, insbesondere graphischer Papiere besonders geeigneten Faserstoffsuspension mit folgenden Schritten:
a) Herstellung einer wässrigen Faserstoffsuspension (S);
b) Reinigung (2) der Faserstoffsuspension (S), sofern sie störende Verunreinigungen enthält;
c) eine erste Fraktionierung in einem ersten Fraktionator (8), der die Faserstoffsuspension (S) gemäß der Faserlänge in eine Langfaserfraktion (LF) und eine Kurzfaserfraktion (KF) aufteilt und
d) Fraktionierung (3, 3') der Faserstoffsuspension (S) in eine Weichfraktion (F1) mit vermehrt flexiblen durch chemischen Aufschluss gebildeten Fasern und eine Hartfraktion (F2) mit vermehrt starren Holzstofffasern, indem
d1) die Kurzfaserfraktion (KF) in einem weiteren Fraktionator (9) entsprechend der Faserflexibilität aufgeteilt wird, wonach die steifere Fraktion die Hartfraktion (F2) bildet und
d2) die Langfaserfraktion (LF) in einem weiteren Fraktionator (10) entsprechend der Faserflexiblität aufgeteilt wird, wonach die steifere Fraktion die Hartfraktion (F2) bildet,
e) eine stark faserzerkleinernde Mahlung (4) der Hartfraktion (F2) ohne die Weichfraktion (F1).

3. Verfahren nach Anspruch 1 oder 2,
**dadurch gekennzeichnet,**
**dass** bei der stark faserzerkleinernden Mahlung (4) die Faserstoffsuspension (S) auf eine Konsistenz zwischen 2 und 8 %, vorzugsweise 3 bis 5 %, eingestellt wird.

4. Verfahren nach Anspruch 1, 2 oder 3,
**dadurch gekennzeichnet,**
**dass** die Mahlung (4) in einem Refiner erfolgt, der mit Messergarnituren ausgestattet ist, deren Schnittwinkel höchstens 20° beträgt.

5. Verfahren nach Anspruch 1, 2, 3 oder 4,
**dadurch gekennzeichnet,**
**dass** bei der Mahlung (4) eine sekundliche Kantenbelastung von mindestens 1000 Ws/km eingestellt wird.

6. Verfahren nach Anspruch 5,
**dadurch gekennzeichnet,**
**dass** bei der Mahlung (4) eine sekundliche Kantenbelastung von mindestens 2000 Ws/km eingestellt wird.

7. Verfahren nach einem der voranstehenden Ansprüche,
**dadurch gekennzeichnet,**
**dass** bei der Mahlung (4) eine reine spezifische Mahlarbeit von mindestens 80 kWh/t übertragen wird.

8. Verfahren nach einem der voranstehenden Ansprüche,
**dadurch gekennzeichnet,**
**dass** durch die Mahlung (4) ein Mahlgrad von mindestens 70° SR erzielt wird.

9. Verfahren nach einem der voranstehenden Ansprüche,
**dadurch gekennzeichnet,**
**dass** die Fraktionierung (3) in mindestens zwei Stufen mit mindestens zwei Fraktionatoren (8, 9, 10) erfolgt.

10. Verfahren nach einem der voranstehenden Ansprüche,
**dadurch gekennzeichnet,**
**dass** als Fraktionator (8) der ersten Stufe mindestens ein Druckapparat verwendet wird, in dem mit Hilfe eines Nasssiebes die Faserstoffsuspension (S) so fraktioniert wird, dass die Langfaserfraktion (LF) in den Überlauf und die Kurzfaserfraktion (KF) in den Durchlauf gelangt.

11. Verfahren nach einem der voranstehenden Ansprüche,
**dadurch gekennzeichnet,**
**dass** als Fraktionatoren (9, 10) der zweiten Stufe Druckapparate verwendet werden, in denen mit Hilfe mindestens eines Nasssiebes die Faserstoffsuspension (S) so fraktioniert wird, dass die flexibleren Fasern in den Siebdurchlauf gelangen.

12. Verfahren nach Anspruch 11,
**dadurch gekennzeichnet,**
**dass** für die Fraktionatoren (9, 10) der zweiten Stufe Siebe eingesetzt werden mit Schlitzen, deren Schlitzweite 0,3 bis 0,8 mm beträgt.

13. Verfahren nach einem der Ansprüche 1 bis 9,
**dadurch gekennzeichnet,**
**dass** als Fraktionatoren (9, 10) der zweiten Stufe hochwirksame Hydrozyklone verwendet werden, in denen die Faserstoffsuspension (S) so fraktioniert wird, dass die flexibleren Fasern in die Leichtstofffraktion gelangen.

## Claims

1. Process for preparing waste paper (M) containing groundwood to form a fibrous slurry particularly suitable for the production of high-quality papers, especially graphic papers, having the following steps:
a) production of an aqueous fibrous slurry (S);
b) cleaning (2) of the fibrous slurry (S) if it contains disruptive contaminants;
c) a first fractionation in a first fractionator (8), which divides the fibrous slurry (S) in accordance with the fibre length into a long-fibre fraction (LF) and a short-fibre fraction (KF) and
d) fractionation (3, 3') of the fibrous slurry (S) into a soft fraction (F1) with fibres of increased flexibility formed by chemical pulping and a hard fraction (F2) with groundwood fibres of increased rigidity, in that
d1) the short-fibre fraction (KF) is divided in a further fractionator (9) in accordance with the fibre flexibility, after which the more rigid fraction forms the hard fraction (F2), or
d2) the long-fibre fraction (LF) is divided in a further fractionator (10) in accordance with the fibre flexibility, after which the more rigid fraction forms the hard fraction (F2),
e) an intensely fibre-comminuting refining (4) of the hard fraction (F2) without the soft fraction (F1).

2. Process for preparing waste paper (M) containing groundwood to form a fibrous slurry particularly suitable for the production of high-quality papers, especially graphic papers, having the following steps:
a) production of an aqueous fibrous slurry (S);
b) cleaning (2) of the fibrous slurry (S) if it contains disruptive contaminants;
c) a first fractionation in a first fractionator (8), which divides the fibrous slurry (S) in accordance with the fibre length into a long-fibre fraction (LF) and a short-fibre fraction (KF) and
d) fractionation (3, 3') of the fibrous slurry (S) into a soft fraction (F1) with fibres of increased flexibility formed by chemical pulping and a hard fraction (F2) with groundwood fibres of increased rigidity, in that
d1) the short-fibre fraction (KF) is divided in a further fractionator (9) in accordance with the fibre flexibility, after which the more rigid fraction forms the hard fraction (F2), and
d2) the long-fibre fraction (LF) is divided in a further fractionator (10) in accordance with the fibre flexibility, after which the more rigid fraction forms the hard fraction (F2),
e) an intensely fibre-comminuting refining (4) of the hard fraction (F2) without the soft fraction (F1).

3. Process according to Claim 1 or 2,
**characterized in that**
during the intensely fibre-comminuting refining (4), the fibrous slurry (S) is adjusted to a consistency between 2 and 8%, preferably 3 to 5%.

4. Process according to Claim 1, 2 or 3,
**characterized in that**
the refining (4) is carried out in a refiner which is equipped with refining gear of which the cutting angle is at most 20°.

5. Process according to Claim 1, 2, 3 or 4,
**characterized in that**
during the refining (4) an edge loading per second of at least 1000 Ws/km is set.

6. Process according to Claim 5,
**characterized in that**
during the refining (4) an edge loading per second of at least 2000 Ws/km is set.

7. Process according to one of the preceding claims,
**characterized in that**
during the refining (4) a pure specific refining work of at least 80 kWh/t is transferred.

8. Process according to one of the preceding claims,
**characterized in that**
as a result of the refining (4), a freeness of at least 70° SR is achieved.

9. Process according to one of the preceding claims,
**characterized in that**
the fractionation (3) is carried out in at least two stages with at least two fractionators (8, 9, 10).

10. Process according to one of the preceding claims,
**characterized in that**
the fractionator (8) used for the first stage is at least one pressure apparatus in which, with the aid of a wet screen, the fibrous slurry (S) is fractionated in such a way that the long-fibre fraction (LF) passes into the overflow and the short-fibre fraction (KF) passes into the flow path.

11. Process according to one of the preceding claims,
**characterized in that**
the fractionators (9, 10) used for the second stage are pressure apparatuses in which, with the aid of at least one wet screen, the fibrous slurry (S) is fractionated in such a way that the more flexible fibres pass into the screen flow path.

12. Process according to Claim 11,
**characterized in that**
the fractionators (9, 10) used for the second stage are screens with slots of which the slot width is 0.3 to 0.8 mm.

13. Process according to one of Claims 1 to 9,
**characterized in that**
the fractionators (9, 10) used for the second stage are highly active hydrocyclones, in which the fibrous slurry (S) is fractionated in such a way that the more flexible fibres pass into the light fraction.

## Revendications

1. Procédé de préparation de vieux papier contenant du bois (M) pour en faire une suspension de matière fibreuse convenant pour la fabrication de papiers de haute qualité, notamment de papiers graphiques, comportant les étapes suivantes :
a) préparation d'une suspension aqueuse de matière fibreuse (S) ;
b) nettoyage (2) de la suspension de matière fibreuse (S) dans la mesure où elle contient des impuretés gênantes ;
c) un premier fractionnement dans un premier fractionneur (8) qui divise la suspension de matière fibreuse (S) suivant la longueur de fibres en une fraction à fibres longues (LF) et une fraction à fibres courtes (KF) et
d) fractionnement (3, 3') de la suspension de matière fibreuse (S) en une fraction molle (F1) contenant des fibres plus souples formées par désintégration chimique et une fraction dure (F2) contenant des fibres plus de bois rigides, dans lequel
d1) la fraction à fibres courtes (KF) est divisée dans un autre fractionneur (9) en fonction de la souplesse des fibres, après quoi la fraction plus rigide constitue la fraction dure (F2) ou
d2) la fraction à fibres longues (LF) est divisée dans un autre fractionneur (10) en fonction de la souplesse des fibres, après quoi la fraction plus rigide constitue la fraction dure (F2),
e) un broyage (4) déchiquetant fortement les fibres de la fraction dure (F2) sans la fraction molle (F1).

2. Procédé de préparation de vieux papier contenant du bois (M) pour en faire une suspension de matière fibreuse convenant pour la fabrication de papiers de haute qualité, notamment de papiers graphiques, comportant les étapes suivantes :
a) préparation d'une suspension aqueuse de matière fibreuse (S) ;
b) nettoyage (2) de la suspension de matière fibreuse (S) dans la mesure où elle contient des impuretés gênantes ;
c) un premier fractionnement dans un premier fractionneur (8) qui divise la suspension de matière fibreuse (S) suivant la longueur de fibres en une fraction à fibres longues (LF) et une fraction à fibres courtes (KF) et
d) fractionnement (3, 3') de la suspension de matière fibreuse (S) en une fraction molle (F1) contenant des fibres plus souples formées par désintégration chimique et une fraction dure (F2) contenant des fibres plus de bois rigides, dans lequel
d1) la fraction à fibres courtes (KF) est divisée dans un autre fractionneur (9) en fonction de la souplesse des fibres, après quoi la fraction plus rigide constitue la fraction dure (F2) et
d2) la fraction à fibres longues (LF) est divisée dans un autre fractionneur (10) en fonction de la souplesse des fibres, après quoi la fraction plus rigide constitue la fraction dure (F2),
e) un broyage (4) déchiquetant fortement les fibres de la fraction dure (F2) sans la fraction molle (F1).

3. Procédé selon la revendication 1 ou 2,
**caractérisé en ce que**,
lors du broyage (4) déchiquetant fortement les fibres, la suspension de matière fibreuse (S) est ajustée à une consistance allant de 2 à 8 %, de préférence 3 à 5 %.

4. Procédé selon la revendication 1, 2 ou 3,
**caractérisé en ce que**
le broyage (4) est réalisé dans un raffineur qui est équipé de garnitures de lames dont l'angle de coupe est de 20° au plus.

5. Procédé selon la revendication 1, 2, 3 ou 4,
**caractérisé en ce que**,
lors du broyage (4), on établit une charge sur les bords d'au moins 1000 Ws/km par seconde.

6. Procédé selon la revendication 5,
**caractérisé en ce que**,
lors du broyage (4), on établit une charge sur les bords d'au moins 2000 Ws/km par seconde.

7. Procédé selon une des revendications précédentes,
**caractérisé en ce que**,
lors du broyage (4), un effort de broyage spécifique pur d'au moins 80 kWh/t est transmis.

8. Procédé selon une des revendications précédentes,
**caractérisé en ce que**,
par le broyage (4), on obtient un degré de mouture d'au moins 70° SR.

9. Procédé selon une des revendications précédentes,
**caractérisé en ce que**
le fractionnement (3) a lieu dans au moins deux niveaux au moyen d'au moins deux fractionneurs (8, 9, 10) .

10. Procédé selon une des revendications précédentes,
**caractérisé en ce que**
on utilise comme fractionneur (8) du premier niveau au moins un appareil à pression dans lequel, à l'aide d'un crible humide, la suspension de matière fibreuse (S) est fractionnée de manière à ce que la fraction à fibres longues (LF) arrive dans le déversoir et la fraction à fibres courtes (KF) arrive dans le débit.

11. Procédé selon une des revendications précédentes,
**caractérisé en ce que**
on utilise comme fractionneurs (9, 10) du deuxième niveau des appareils à pression dans lesquels, à l'aide d'au moins un crible humide, la suspension de matière fibreuse (S) est fractionnée de manière à ce que les fibres plus souples arrivent dans le débit du crible.

12. Procédé selon la revendication 11,
**caractérisé en ce que**,
pour les fractionneurs (9, 10) du deuxième niveau, on utilise des cribles comportant des fentes dont la largeur de fente est de 0,3 à 0,8 mm.

13. Procédé selon les revendications 1 à 9,
**caractérisé en ce que**
on utilise comme fractionneurs (9, 10) du deuxième niveau des hydrocyclones très efficaces dans lesquels la suspension de matière fibreuse (S) est fractionnée de manière à ce que les fibres plus souples arrivent dans la fraction de matière légère.
